# EUROPEAN PATENT APPLICATION

(11) **EP 4 802 982 A1**
(43) Date of publication of application: **09.09.2026**
(21) Application number: 26160154.6
(22) Date of filing: 23.02.2026
(51) Int. Cl.: A47L 23/00, B05D 7/24, B08B 5/02, B29B 17/02, C09D 5/16, E01C 7/35, E04F 13/08, E04F 15/00

(54) **AN APPARATUS FOR SEPARATING PARTICULATE EMBEDDED INTO A PLANAR SUBSTRATE**

(30) Priority: 03.03.2025 GB 202503004
(71) Applicant: James Halstead PLC, Manchester, Greaster Manchester M26 1JN (GB)
(72) Inventor: Smallman, Paul, Manchester, M26 1JN (GB); Mortimer, Stephen, Manchester, M26 1JN (GB)
(74) Representative: Wilson Gunn

(57) **Abstract**

An apparatus for separating particulate embedded into a planar substrate, the apparatus comprising a support mechanism for supporting the planar substrate, at least one application nozzle for directing a pressurised fluid or mixture at the planar substrate with embedded particulate, wherein the pressurised fluid is applied at a combination of pressure and distance relative to the planar substrate with embedded particulate to dislodge the embedded particulate without loss of material from the planar substrate.

## Description

### Technical Field of the Invention

The present invention relates to apparatus for separating particulate embedded into a planar substrate and particularly to an apparatus for separating particulate embedded in industrial non-slip flooring.

### Background to the Invention

Industrial non-slip flooring can be made as a polymeric sheet with particulate material embedded when the polymer is still molten. As it hardens, the polymer grips the particulate, capturing it and the particulate material provides the non-slip characteristics.

When the floor is removed at end of life, it is difficult to separate the particulate from the polymer so that the polymer can be recycled.

There is increasing pressure towards recycling industrial flooring of this type at the end of its life.

Past attempts at separating the particulate from the planar substrate focused on size reduction, such as shredding or granulating the industrial flooring with the embedded particulate material, to enable reprocessing. It has been found though that the abrasive nature of the embedded particulate material used, caused excessive equipment wear.

Other options trialled for separating the embedded particulate material from the substrate have included solvent dissolving processes to release the embedded particulate material such Polyloop^{™}, however these types of processes are expensive and can only deal with a low volume of the industrial flooring.

It would therefore be an advance in the art to provide an alternative apparatus and/or process for separating particulate embedded into a planar substrate, particularly a polymeric substrate.

### Summary of the Invention

According to an aspect of the invention, there is provided an apparatus for separating particulate embedded into a planar substrate, the apparatus comprising:
a) A support mechanism for supporting the planar substrate,
b) At least one application nozzle for directing a pressurised fluid or mixture at the planar substrate with embedded particulate;
wherein the pressurised fluid is applied at a combination of pressure and distance to the planar substrate with embedded particulate to dislodge the embedded particulate without no or limited loss of material from the planar substrate.

Provision of the use of pressurised fluid to remove embedded particulate from the planar substrate without otherwise breaking up the polymeric sheet allows the separation of the particulate from the planar substrate and recovery of both. The use of pressurised fluid also means that the separation is achieved without contact between the separating equipment and the particulate and/or the planar substrate.

Although not necessarily limited to polymeric flooring, the present invention is particularly well adapted to separating particulate embedded into a polymeric flooring, from the planar substrate of the polymeric flooring.

The present invention is particularly adapted to separating particulate embedded into a planar substrate from the planar substrate. The particulate may be of any type. For example, the particulate material may be or include one or more particles of any type of material such as a glass, silica, polymeric, crystal, ceramic, silicon carbide or aluminium oxide. Use of the term 'particulate' in this description and claims is intended to encompass one or more discrete or separate and distinct particles embedded at least partially in the planar substrate. 'Removal of particulate' is intended to encompass the removal of the particles from the planar substrate.

The particulate material is embedded in the planar substrate. The particulate may be embedded at least into an upper surface of the planar substrate. The particulate material may be provided throughout the depth of the planar substrate so that particulate material is present/exposed as the substrate wears. The particulate may extend upwardly from an upper surface of the planar substrate. The planar substrate may partially surround each particle of the particulate to hold each particle into the planar substrate.

The planar substrate may be a polymeric substrate. Particulate material may be embedded into a polymeric material when the polymeric material is molten and then the polymeric material may set.

The planar substrate may be formed of any one or more polymers. The one or more polymers may be recyclable polymers. One example of polymeric material is PVC. Separation of particulate from the planar PVC substrate allows the planar PVC substrate to be recycled.

The apparatus comprises a support mechanism for supporting the planar substrate. The support mechanism will preferably support the planar substrate thereon during the separation of the particulate material from the planar substrate. The support mechanism may support the planar substrate prior to separation and/or continue to support the planar substrate after separation of the particulate material, for example to allow the recovered planar substrate to be collected for further processing.

The support mechanism may be an open support mechanism comprising a number of support members configured to support the planar substrate thereon, with one or more spaces of gaps between the support members. The support mechanism may provide a substantially planar support. The support mechanism may be substantially horizontal in use.

In one form, the support mechanism may be provided as a moving belt or similar. The moving belt may be provided as a mesh conveyor belt or a chain belt. The moving belt may be formed in an endless loop. The moving belt may be driven in rotation to move the planar substrate relative to the at least one application nozzle during the separation process.

In an alternative form, the support mechanism may be provided as a plurality of rollers upon which the planar substrate is supported.

The support mechanism may preferably move the planar substrate from a loading zone in which the planar substrate with embedded particulate material is loaded onto the support mechanism, through a separation zone in which the particulate is separated from the planar substrate, and to a collection zone to collect the planar substrate for disposal or further processing.

The planar substrate may remain on the support mechanism due to gravity. One or more planar substrate engagement configurations may be provided on the support mechanism to engage the planar substrate and restrain the planar substrate against movement during the separation process. For example, one or more teeth or fingers extending upwardly from the engagement mechanism may be provided to engage and hold the planar substrate. In an alternative form, one or more shaped bays or recesses may be provided on the support mechanism into which a planar substrate is at least partially received during the separation process.

The support mechanism may include a lower support upon which the planar substrate is supported and an upper retention portion provided spaced apart from the lower support to trap or restrain the planar substrate therebetween. The upper retention portion may be provided in any form. For example, the upper portion may be provided as a moving belt or similar, or as a plurality of rollers.

The upper retention portion may preferably be counter rotating relative to the lower moving belt or plurality of rollers.

The lower support and the upper retention portion may each have a substantially planar part or define a substantially planar part. The respective substantially planar parts of the lower support and the upper retention portion may correspond in location to one another at least within the separation zone of the apparatus. The lower support and upper retention portion may be spaced apart. This may allow the planar substrate to be located therebetween.

The upper retention portion may abut an upper surface of the planar substrate. The upper retention portion may be spaced from the upper surface of the planar substrate to retain the planar substrate against movement, but may not necessarily abut the planar substrate on an upper side thereof. The spacing of the upper retention portion to the upper surface of the planar substrate may provide a degree of tolerance in the apparatus, to accept and process different thicknesses of planar substrate.

Provision for different thicknesses may be achieved through a positive mechanism such as one or more sprung members or arrangements (such as rollers for example) or downwardly biased members or arrangements to apply a force onto the upper surface of the planar substrate, but to allow variations in thickness.

Any force applied to an upper surface of the planar substrate may be sufficient to hold the planar substrate onto the lower support. The force may be applied consistently to the planar support over the length of the separation portion.

Instead of sprung or biased members or arrangements, the force may be applied using one or more members or arrangements to apply force to the upper surface of the planar substrate under gravity. The force applies may be adjustable. The force applied may be larger than a static gravitational force through the use of one or more weighted members or arrangements.

As mentioned above, the upper retention portion may include a number of rollers. The rollers may each have a rotation axis in substantially the same plane. The rollers may be spaced apart over the separation and/or loading zone.

The upper retention portion may include a number of spaced apart members. The spaced apart members may be fixed in position. The spaced apart members may extend transversely to the lower support mechanism. Alternatively, the spaced apart members may extend parallel to the direction of movement of the lower support mechanism. Providing the spaced apart members extending parallel to the direction of movement may reduce the number of members required. In this configuration, the spaced apart members may be configured as skids or similar. The skids may have an upwardly canted end provided at the entry end to the apparatus.

The support mechanism may have a collection end which is provided or extends over a collection container so that the spent planar substrate (with the particulate removed therefrom) can be removed from the support mechanism by falling off the support mechanism into the collection container.

The apparatus includes at least one application nozzle for directing a pressurised fluid or mixture at the planar substrate with embedded particulate. The apparatus may include a plurality of application nozzles. Where multiple application nozzles are provided, the application nozzles may be provided in a regular array. Multiple application nozzles may be provided in one or more lines extending across the width of the apparatus. More than one line of application nozzles may be provided. More than one application nozzle may be provided in a line. The application nozzles may preferably be offset from one another. This may assist with accessing or providing enhanced coverage across the dimension of the planar substrate.

The at least one application nozzle may be provided in a fixed position (although adjustable distance, angle or the like). The at least one application nozzle may be provided in a moving arrangement. Use of a moving at least one application nozzle may allow a reduction in the number of nozzles used but still ensure effective coverage of the planar substrate.

At least one moving application head may be provided with at least one application nozzle. In one form, the moving application head may be a rotary head with a plurality of application nozzles. Any rotary head may rotate but may also move relative to the planar substrate. The movement may have any suitable and/or effective pattern, such as movement laterally in a reciprocating pattern (whilst rotating).

The at least one application nozzle may be provided in the separation zone of the apparatus.

The at least one application nozzle may be directed at the planar substrate within the separation zone. The at least one application nozzle may be directed between any upper retention portion provided in the apparatus.

The at least one application nozzle is preferably directed downwardly at the support mechanism. In some configurations, where particulate material is provided through the thickness of the planar substrate, at least one application nozzle may be directed upwardly from below the support mechanism.

The at least one application nozzle may be provided in the separation zone. The separation zone may be defined by a containing shroud with the at least one application nozzle provided within the containing shroud. The containing shroud may have any shape and/or dimensions.

A particulate separation container may be provided below the support mechanism. A particulate separation container may be provided within the separation zone. The particulate separation container may collect separated particulate material which falls downwardly under the force of gravity once released from the planar substrate.

The particulate separation container may collect spent fluid or mixture which is applied by the at least one application nozzle, and the dislodged particulate material. The particulate separation container may include one or more separation devices or assemblies to separate the particulate from the spent fluid or mixture. Any type of separation device or assembly may be provided. For example, the liberated particulate material may be separated from the spent fluid or mixture according to density and/or size.

The one or more separation devices or assemblies may be provided in or associated with the particulate separation container.

The one or more separation devices or assemblies may include one or more sieve.

A collection sump may be provided at a lower part of the particulate separation container to allow any fluid or mixture to be removed from the particulate separation container and recycled for reuse. A fluid recycle inlet may be located above a lower wall of the particulate separation container. The fluid recycle inlet may be configured as a weir or overflow system to allow fluid or mixture to leave the particulate separation container, but to retain the particulate in the particulate separation container. Recycled fluid may be returned to the at least one application nozzle for reuse.

A lower wall of the particulate separation container may be angled downwardly to encourage heavier material (particulates) to move to a collection end of the particulate separation container. The particulate material may be removed from the particulate separation container from the collection end of the particulate separation container. The collection end of the particulate separation container may be located on an entry end of the apparatus.

The pressurised fluid used may be air. The pressurised fluid used may be a liquid, which may, in one form, be water.

A mixture can be utilised, for example steam.

A mixture may include smaller particulate material for example sand, grit or similar, in a liquid or gaseous carrier fluid.

The parameters of the pressurised fluid or mixture directed at the planar substrate may depend on the nature of the planar substrate and/or the embedding of the particulate within the planar substrate.

The parameters of the pressurised fluid or mixture directed at the planar substrate may include at least distance and pressure. The distance parameter may be the separation distance between the nozzle and the planar substrate. The separation distance may be adjustable. The at least one application nozzle may be height adjustable to adjust the separation distance. The separation distance may be up to 50 cm. A particularly effective separation distance may be approximately 10cm. Of course, the effective separation distance may depend on the other parameters of the pressurised fluid or mixture directed at the planar substrate (such as pressure and/or angle of application) as well as the material of the planar substrate and/or the particulate and/or the degree to which the particulate is embedded.

The pressure may be adjustable. In circumstances where the pressurised fluid is water, the pressure may be between 30 to 280 bar (3000 to 28000kPa). A target operating pressure may be approximately 150 bar (15000kPa).

Application angle or orientation of the at least one application nozzle may be a further parameter. An application angle may range up to 90 degrees (perpendicular) (between the nozzle and the planar substrate). The application angle may be in the forward direction or the rearward direction, relative to the direction of movement of the planar substrate through the apparatus. An indicative application angle may be between approximately 10 degrees to 20 degrees (in the forward or rearward direction). The at least one application nozzle may be directed at the planar substrate at any angle between 10 degrees to 170 degrees to the planar substrate.

An acute application angle may be preferred. An application angle of less than 45 degrees (in the forward or rearward direction) may be more effective than a larger angle, with an application angle of less than 30 degrees (in the forward or rearward direction) being more effective than a greater angle. An application angle of 15 to 20 degrees (in the forward or rearward direction) has been found to be particularly effective.

The temperature of pressurised fluid or mixture directed at the planar substrate may have different advantages. For example, use of a heated fluid or mixture (above ambient temperature, possibly above 50°C and optionally above 60°C) may make the planar substrate more pliable and thereby realise a more effective removal of the particulate without removal or separation of the planar substrate itself because the material of the planar substrate may deform more easily. Use of a colder fluid or mixture (below ambient temperature, possibly less than 10°C and optionally below 0°C) may make the planar substrate more rigid and thereby realise a more effective removal of the particulate without removal or separation of the planar substrate itself. The use of pressurised fluid or mixture at elevated or reduced temperature may be advantageous depending on the one or more other parameters, but particularly the material of the planar substrate and its reaction to elevated temperature or reduced temperature.

The at least one application nozzle may have an inner eyelet size of approximately 1.46 mm and an outer diameter of approximately 5.91 mm. The at least one application nozzle may have an adjustable outlet to adjust the degree of spread (area) of the pressurised fluid or mixture, at the planar substrate. This may allow the application area of the pressurised fluid or mixture to be adjusted in use. The adjustment may occur in real-time.

The at least one application nozzle may provide a dispersion shape and pattern.

The provision of an apparatus as described may allow removal of particulates/ aggregates from a planar substrate, such as non-slip flooring, using a non-contact method.

Without wishing to be limited by theory, observations of the apparatus as described have shown that the application of the pressurised fluid or mixture causes a small well or crater to be formed around each particle. The pressurised fluid or mixture may deform the planar substrate, but is managed/adjusted so as not to penetrate the particulate. The further application of the pressurised fluid or mixture may fill the crater and eject the particle from the planar substrate without otherwise removing any of the planar substrate material.

The separation of the particulate from the planar substrate aids recycling, downsizing and reprocessing. It also allows recycling of the planar substrate for example, safety flooring into other media and flooring products such as homogenous, Luxury Vinyl Tile and the like. Further, the separation will lead to reduced wear on recycling equipment used to recycle the planar substrate. It also allows separation of particulates/aggregates from planar substrate and collection due to density difference.

Importantly, the apparatus of the present invention allows for minimal removal of material from the planar substrate, retaining the planar substrate substantially whole for easier processing.

### Detailed Description of the Invention

In order that the invention may be more clearly understood one or more embodiments thereof will now be described, by way of example only, with reference to the accompanying drawings, of which:
- Figure 1: is a schematic view of an apparatus according to a first embodiment.
- Figure 2: is a schematic view of an apparatus according to a second embodiment.
- Figure 3: is a schematic view of an apparatus according to a third embodiment.

Three example embodiments of an apparatus 10 for separating particulate embedded into a planar substrate 11 are shown in the accompanying Figures.

In each case, the apparatus comprises a support mechanism for supporting the planar substrate 11, at least one application nozzle 12 for directing a pressurised fluid or mixture at the planar substrate 11 with embedded particulate. The pressurised fluid is applied at a combination of pressure and distance relative to the planar substrate **11** with embedded particulate to dislodge the embedded particulate without loss of material from the planar substrate 11.

The main difference between the embodiments illustrated is the configuration of the support mechanism for supporting the planar substrate 11. The support mechanism supports the planar substrate 11 thereon during the separation of the particulate material from the planar substrate 11.

As shown in the illustrated embodiments, the support mechanism moves the planar substrate 11 from a loading zone 13 in which the planar substrate 11 with embedded particulate material is loaded onto a lower support, through a separation zone 14 in which the particulate is separated from the planar substrate 11, and to a collection zone 15 to collect the planar substrate 11 for disposal or further processing.

As shown, the lower support 16 provides a substantially planar support which is substantially horizontal in use.

In the illustrated forms, the lower support 16 is provided as a moving belt or similar. The moving belt may be provided as a mesh conveyor belt or a chain belt. The moving belt may be formed in an endless loop as shown. The moving belt may be driven in rotation to move the planar substrate 11 during the separation process, from the loading zone 13, through the separation zone 14 and into the collection zone 15.

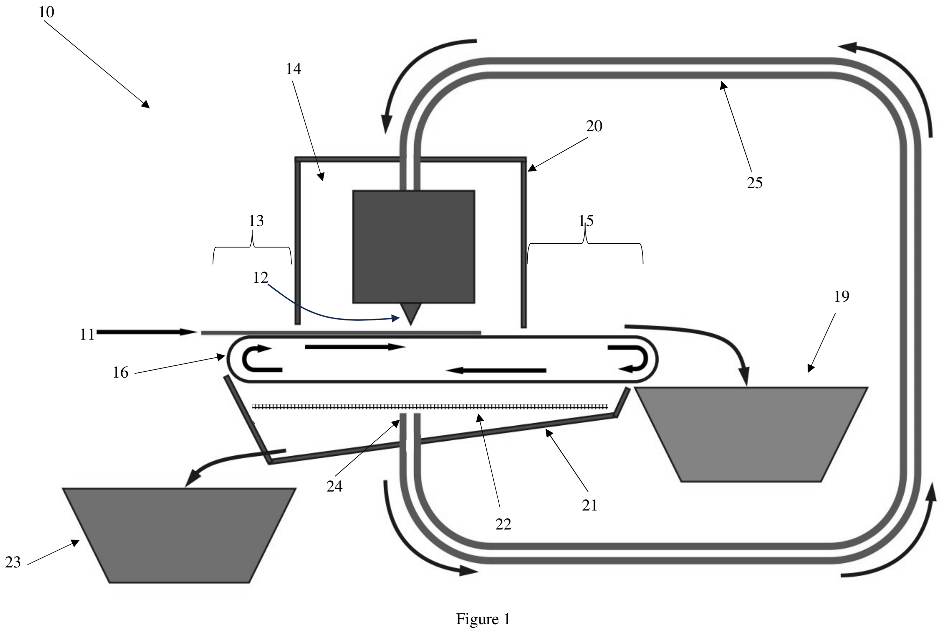

The planar substrate 11 remains on the support mechanism due to gravity in Figure 1.

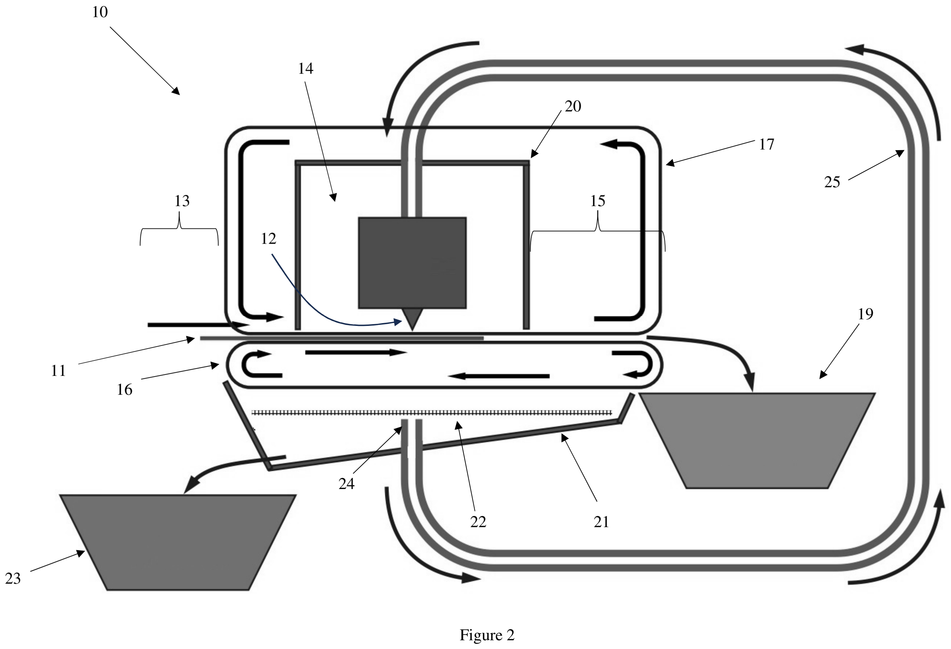

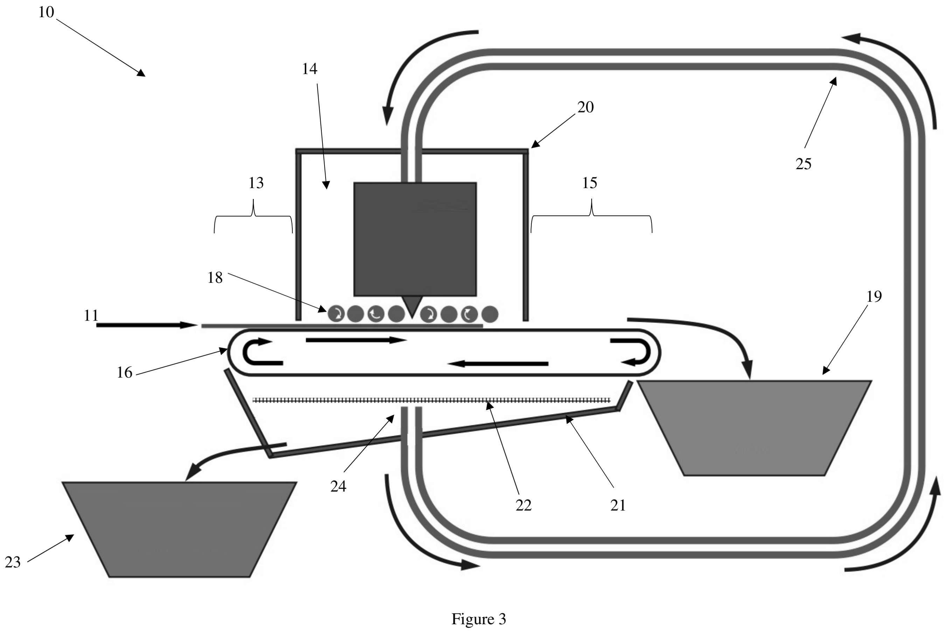

The support mechanism of Figures 2 and 3 includes the lower support 16 upon which the planar substrate 11 is supported and an upper retention portion provided spaced apart from the lower support 16 to trap or restrain the planar substrate 11 therebetween. The upper retention portion is provided as a moving belt 17 in the embodiment shown in Figure 2, and as a plurality of rollers 18 in the embodiment shown in Figure 3.

As shown, the lower support 16 and the upper retention portion 17, 18 each have a substantially planar part or define a substantially planar part. The respective substantially planar parts of the lower support 16 and the upper retention portion 17 18 correspond in location to one another at least within the separation zone 14 of the apparatus. The lower support 16 and upper retention portion 17, 18 are spaced apart with the planar substrate located therebetween.

The upper retention portion 17, 18 may abut an upper surface of the planar substrate 11, or may be spaced from the upper surface of the planar substrate to retain the planar substrate 11 against movement, but may not necessarily abut the planar substrate 11 on an upper side thereof.

As shown in Figure 3, the number of rollers 18 each have a rotation axis in substantially the same plane. The rollers 18 are spaced apart over the length of the separation zone 15.

The support mechanism may have a collection end which is provided or extends over a spent substrate collection container 19 so that the spent planar substrate (with the particulate removed therefrom) can be removed from the lower support 16 by simply falling off the lower support 16 into the collection container 19.

The apparatus may include more than one application nozzle 12. Where multiple application nozzles are provided, the application nozzles 12 may be provided in a regular array. Multiple application nozzles 12 may be provided in one or more lines extending across the width of the apparatus. More than one line of application nozzles 12 may be provided. More than one application nozzle 12 may be provided in a line. The application nozzles may preferably be offset from one another. This may assist with accessing or providing enhanced coverage across the dimension of the planar substrate.

In the illustrated embodiments, the application nozzles 12 are provided in the separation zone 15 of the apparatus.

The application nozzles 12 are directed at the planar substrate **11** within the separation zone 15. The at least one application nozzle is directed between any upper retention portion 17, 18 provided in the apparatus.

The application nozzle 12 is directed downwardly at the support mechanism.

As shown, the separation zone 15 is defined by a containing shroud 20 with the application nozzle 12 provided within the containing shroud 20. The containing shroud 20 may have any shape and/or dimensions.

A particulate separation container 21 may be provided below the lower support 16. A particulate separation container 21 may be provided within the separation zone 15. The particulate separation container 21 may collect separated particulate material which falls downwardly under the force of gravity once released from the planar substrate 11 and spent fluid or mixture.

The particulate separation container 21 may collect spent fluid or mixture which is applied by the application nozzles 12, and the dislodged particulate material.

The particulate separation container 21 may include one or more separation devices or assemblies such as a sieve plate 22 to separate larger particulate from the spent fluid or mixture. The smaller particulate passes through the openings in the sieve plate 22.

As shown, the particulate separation container 21 has a lower wall which is angled downwardly to encourage heavier material (particulates) to move to a collection end of the particulate separation container 21. The particulate material may be removed from the particulate separation container 21 from the collection end of the particulate collection container 21 into a collection container 23.

A fluid recycle inlet 24 is located above the lower wall of the particulate separation container 21. The fluid recycle inlet 24 is configured as a weir or overflow system to allow fluid or mixture to leave the particulate separation container 21, but to retain the particulate in the particulate separation container 21. Recycled fluid may be returned via the return pathway 25 to the application nozzles 12 for reuse.

In the illustrated embodiments, the pressurised fluid used is water or steam.

The parameters of the pressurised fluid or mixture directed at the planar substrate 11 may depend on the nature of the planar substrate 11 and/or the embedding of the particulate within the planar substrate 11.

The parameters of the pressurised fluid or mixture directed at the planar substrate may include at least distance and pressure. A particularly effective separation distance may be approximately 10cm. A target operating pressure may be approximately 150 bar (15000kPa). An application angle may range from 10 to 90 degrees (between the nozzle and the planar substrate). An indicative application angle may be 20 degrees.

The at least one application nozzle may have an inner eyelet size of approximately 1.46 mm and an outer diameter of approximately 5.91 mm.

The one or more embodiments are described above by way of example only. Many variations are possible without departing from the scope of protection afforded by the appended claims.

## Claims

1. An apparatus for separating particulate embedded into a planar substrate, the apparatus comprising:
a. a support mechanism for supporting the planar substrate,
b. at least one application nozzle for directing a pressurised fluid or mixture at the planar substrate with embedded particulate;
wherein the pressurised fluid is applied at a combination of pressure and distance to the planar substrate with embedded particulate to dislodge the embedded particulate with no or limited loss of material from the planar substrate.

2. An apparatus as claimed in claim 1 wherein the support mechanism is an open support mechanism comprising a number of support members configured to support the planar substrate thereon, with one or more spaces of gaps between the support members.

3. An apparatus as claimed in any one of the preceding claims wherein the support mechanism is a moving belt or similar formed in an endless loop driven in rotation to move the planar substrate relative to at least one application nozzle.

4. An apparatus as claimed in any one of the preceding claims comprising a loading zone in which the planar substrate with embedded particulate material is loaded onto the support mechanism, a separation zone in which the particulate is separated from the planar substrate, and a collection zone in which spent planar substrate is collected for disposal or further processing, wherein the at least one application nozzle is provided in the separation zone.

5. An apparatus as claimed in claim 4 wherein the separation zone is defined by a containing shroud with the at least one application nozzle provided within the containing shroud.

6. An apparatus as claimed in any one of the preceding claims wherein one or more planar substrate engagement configurations is provided on the support mechanism to engage the planar substrate and restrain the planar substrate against movement during the separation process.

7. An apparatus as claimed in any one of the preceding claims wherein the support mechanism comprises a lower support upon which the planar substrate is supported and an upper retention portion provided spaced apart from the lower support to trap or restrain the planar substrate therebetween.

8. An apparatus as claimed in claim 7 wherein the upper retention portion is provided as a moving belt or similar, or as a plurality of rollers.

9. An apparatus as claimed in claim 7 or claim 8 wherein the lower support and the upper retention portion each have a substantially planar part or define a substantially planar part, with the respective substantially planar parts of the lower support and the upper retention portion corresponding in location to one another.

10. An apparatus as claimed in any one of the preceding claims wherein the at least one application nozzle comprises a plurality of application nozzles, optionally wherein the plurality of application nozzles are provided in one or more lines extending across a width of the apparatus, and optionally wherein multiple lines of application nozzles are provided with the application nozzles in lines offset from one another.

11. An apparatus as claimed in any one of the preceding claims further comprising a particulate separation container provided below the support mechanism to collect separated particulate material which falls downwardly under the force of gravity once released from the planar substrate.

12. An apparatus as claimed in claim 11 further comprising a fluid recycle inlet located above a lower wall of the particulate separation container configured as a weir or overflow system to allow fluid or mixture to leave the particulate separation container, but to retain the particulate in the particulate separation container.

13. An apparatus as claimed in claim 12 wherein a lower wall of the particulate separation container is angled downwardly to encourage particulate to move to a collection end of the particulate separation container.

14. An apparatus as claimed in any one of the preceding claims wherein the pressurised fluid used is selected from the group of gas, liquid or steam, optionally wherein the mixture comprises sand, grit or similar, in a water or air carrier fluid.

15. An apparatus as claimed in any one of the preceding claims wherein the at least one application nozzle is provided at an application angle of up to 90 degrees in a forward or rearward direction relative to a direction of movement of the planar substrate through the apparatus, optionally 20 degrees.
